# EUROPÄISCHE PATENTSCHRIFT

(11) **EP 1 043 549 B1**
(45) Veröffentlichungstag und Bekanntmachung des Hinweises auf die Patenterteilung: **31.05.2006**
(21) Anmeldenummer: 00107209.9
(22) Anmeldetag: 01.04.2000
(51) Int. Cl.: F24J 2/46

(54) **Rahmenprofil für einen Sonnenkollektor**
Frame profile for solar collector
Profilé de cadre pour collecteur solaire

(30) Priorität: 07.04.1999 DE 19915504
(43) Veröffentlichungstag der Anmeldung: 11.10.2000
(73) Patentinhaber: SCHÜCO International KG, 33609 Bielefeld (DE)
(72) Erfinder: Gummrich, Dirk, 34253 Lohfelden (DE); Imkamp, Gerd, 33334 Gütersloh (DE); Kaiser, Konrad, 59590 Gesecke (DE); Thole, Frank, 33604 Bielefeld (DE)
(74) Vertreter: Specht, Peter

(56) Entgegenhaltungen:
- EP-A- 0 062 582
- EP-A- 0 537 425
- EP-A- 0 674 141
- CH-A- 651 379
- DE-A- 2 811 604
- DE-A- 4 002 892
- DE-U- 29 521 277
- FR-A- 2 381 982
- FR-A- 2 470 925
- US-A- 4 278 070

## Beschreibung

Die Erfindung betrifft ein Rahmenprofil für einen Sonnenkollektor nach dem Oberbegriff des Anspruches 1.

Rahmenprofil der gattungsgemäßen Art dienen als tragendes Profil, aus dem ein umlaufender Rahmen gebildet wird, der - mit einer oberen und unteren Abdeckung und sogenannten Absorberplatten, Leitungen für Vor- und Rücklaufanschlüsse und für ein Wärmträgermedium und ggf. einer Wärmeisolierung ausgerüstet - einen Sonnenkollektor einfaßt.

Sonnenkollektoren, deren Gehäuse aus tragenden Rahmenprofilen gebildet werden, sind an sich bekannt. So zeigt die DE 295 21 277 U1 Rahmenprofile mit zwei nach innen gerichtete Nuten, die zur Aufnahme von Abdeckungen dienen. Die Abdeckungen bestehen üblicherweise am oberen Ende des Rahmenprofils aus transparenten Deckplatten, wie z.B. Glasscheiben, die in Dichtungen in den Nuten eingefaßt sind, und an der Unterseite, zum Baukörper gerichtet, aus Blechen. Aus den Rahmenprofilen wird das Gehäuse des Sonnenkollektors gebildet. Die Anordnung der weiteren Bestandteile der Sonnenkollektoren, wie z. B. die Anordnung der Absorberplatten und Wärmeisolierungsmaterial im Rahmen, ist dabei weitgehend von der Positionierung und Auslegung der Rahmenprofile unabhängig.

Weiteren Stand der Technik zeigen die CH-A 651 378 sowie die DE 40 02 892 A, FR-A-2 381 982 und die FR-A- 2 470 925. Die DE 295 21 277 U1 zeigt die Merkmale a) bis d) des Anspruchs 1.

An den bekannten Konstruktionen ist zunächst problematisch, daß Steckverbindungen durch zusätzlich erforderliche sichtbare Eckverbindungselemente, die bei der Montage durch Zusammenschieben und Verkleben miteinander verbunden werden, einen erhöhten Kosten- und Montageaufwand mit sich bringen. Das Verbinden mit Steckelementen wird zumeist von Hand durch geführt und kann nicht automatisiert werden. Die zusätzlichen Verbindungselemente bringen zudem erhöhte Kosten mit sich und machen einen Eindeckrahmen erforderlich, der ebenfalls die Kosten des Sonnenkollektors erhöht.

Bei anderen bekannten Konstruktionen tritt das Problem auf, daß am Rahmenprofil keine ebene Basisfläche vorhanden ist, auf der die Rahmenkonstruktion aufliegen könnte. Ein weiteres bekanntes Rahmenprofil bringt zudem das Problem mit sich, daß sich eine an der Basis befindliche Schraubnut unter Belastung aufweiten kann.

Die wesentlichsten Probleme von Rahmenprofilen für Sonnenkollektoren des gattungsgemäßen Standes der Technik treten dadurch auf, daß es nicht möglich ist, weitere Elemente an dem Rahmenprofil zur Außenseite hin, außer Befestigungselemente im Fußpunktbereich, anzuschließen und dadurch, daß die obere Aufnahmenut für die Abdeckung, die in Dichtungen gefaßt ist, nicht entwässert werden kann, so daß bei dem zwangsläufig erfolgenden Eintritt von Wasser ein Abführen zur Außenseite, also aus dem Kollektor heraus, nicht möglich ist. Es fehlt also gänzlich eine "kontrollierte Entwässerung". Zwar ist es aus der EP 0 537 425 bekannt, mit einer Entwässerungsrinne Oberflächenwasser abzuleiten, welches an den Rändern des Kollektors in diesen eindringt. Eine Kondenswasserableitung wird durch diese Rinne aber nicht gewährleistet.

Es ist daher das vordringliche Ziel der Erfindung, das gattungsgemäße Rahmenprofil hinsichtlich seiner Entwässerungsfunktionen weiterzuentwickeln. Dabei soll bei einfacher konstruktiver Ausgestaltung ferner auch die Funktionalität des Rahmenprofils erhöht werden.

Die Erfindung erreicht dieses Ziel durch den Gegenstand des Anspruchs 1.

Die Erfindung schafft ein Rahmenprofil für einen Sonnenkollektor, das folgendes aufweist: einen den Sonnenkollektor seitlich einfassenden Grundschenkel, eine an den Grundschenkel angeformte, zum Kollektorinneren hin offene erste Aufnahmenut in der eine dem Strahlungseinfall zugewandte obere Abdeckung aufgenommen ist, sowie eine an den Grundschenkel angeformte, zum Kollektorinneren hin offene zweite Aufnahmenut in die wenigstens eine dem Strahlungseinfall abgewandte untere Abdeckung eingreift wobei unter der oberen Abdeckung eine Absorbereinrichtung, insbesondere eine oder mehrere Absorberplatten, sowie Hin- und Rücklaufleitungen für ein Wärmeträgermedium und/oder Wärmeisoliermittel untergebrackt sind. Dabei ist an der vom Kollektorinneren abgewandt liegenden Außenseite des Grundschenkels eine mit einer Öffnung versehene Mehrfunktionsnut vorgesehen, welche zur Ableitung von Feuchtigkeit am Sonnenkollektor und zur Aufnahme von Dichtungen und/oder zur Aufnahme weiterer Elemente ausgelgt ist, wobei an die erste Aufnahmenut (6) für die obere Abdeckung (16) eine nach außen über die Ebene des Grundschenkels (4) vorstehende Entwässerungskammer (12) angeformt ist, und
wobei eine untere Basiswandung (24) der Entwässerungskammer (12) unterhalb der Ebene des unteren Aufnahmeschenkels (22) der Öffnung der ersten Aufnahmenut (6) ausgebildet ist.

Die Nut an der Außenseite des Rahmenprofils lässt sich gleich mehrfach nutzen läßt. So kann die Nut nur zur Entwässerung genutzt werden. Darüber hinaus wird die Nut aber vorzugsweise auch dazu genutzt, optisch vorteilhafte Verschlußdichtungen, Kopplungsdichtungen zu weiteren Kollektoren, Griffe bzw. Transporthalter und andere Elemente aufzunehmen.

Angemerkt sei, daß sich die Begriffe wie "oben, unten, innen, außen" auf Kollektoren in ihrer üblichen Einbausituation beziehen, in welcher die Abdeckplatte zur Sonne hin (was hier als "oben" bezeichnet wird) ausgerichtet ist. Der Begriff "innen" bezieht sich auf die innerhalb des aus den Rahmenprofilen gebildeten Gehäuses liegenden Elemente des Sonnenkollektors.

Das Problem der Ableitung von Kondenswasser aus einem Kollektor wurde bei dem bekannten Stand der Technik bisher in keiner Weise aufgegriffen und gelöst. Hier schafft die Erfindung auf einfache Weise Abhilfe, indem sie an die Aufnahmenut eine zur Ableitung des Kondenswassers geeignete Entwässerungsnut anschließt.

Vorzugsweise ist die Entwässerungsnut zwischen der ersten Aufnahmenut und einer zum Kollektorinneren hin an den Grundschenkel angeformten Eckverbinderkammer ausgebildet. Dabei ist es ferner vorteilhaft, wenn die Entwässerungsnut und die Mehrfünktionsnut über wenigstens eine Entwässerungsöffnung im Grundschenkel miteinander in Wirkverbindung stehen. Auf diese Weise wird gewährleistet, daß
das aus der Entwässerungsnut ausfließende Wasser gemeinsam mit weiterer am Kollektor abzuleitender Feuchtigkeit durch die Mehr- bzw. Multifunktionsnut abgeleitet wird.

Die Entwässerungskammer dient in vorteilhafter Weise der Ableitung von Feuchtigkeit, welche in die obere Aufnahmenut eindringt.

Die Erfindung bietet in ihren verschiedenen Variationen zudem u.a. noch folgende Vorteile:
- Die Mehrfunktionsnut ermöglicht eine zweifache Entwässerung (Oberflächenwasser und Kondenswasser).
- Die Mehrfunktionsnut ermöglicht das Durchführen eines Stanzmesser für die Eckverbindung.
- Die Mehrfunktionsnut ermöglicht die Aufnahme einer Dichtung und eines Kantbleches zur sicheren Abdichtung bei einer In-Dach-Montage.
- Die Mehrfunktionsnut ermöglicht die Aufnahme von Kopplungsdichtungen, die bei Anordnung mehrerer Solarkollektoren den Zwischenraum einfach und sicher abdichtet und optisch ansprechend wirkt.
- Die Mehrfunktionsnut ermöglicht die Aufnahme eines unverlierbaren Transporthalters und gewährleistet dadurch eine sichere Montage auch in schwierigen Situationen.
- Die Mehrfunktionsnut ermöglicht die Aufnahme von Dichtungen, die als optische Verschlüsse dienen.
- Das Rahmenprofil weist vorzugsweise einen langen, mittleren Profilschenkel auf, der als Durchgang für das Wärmeträgermedium bzw. für dessen Rohrleitungen nutzbar ist.
- Neben der Mehrfunktionsnut ermöglicht eine zweite, nach außen hin geöffnete Befestigungsnut mit einem Gewindeprofil die einfache Montage des Sonnenkollektors mit metrischen Schrauben oder die Aufnahme von Klemmhaltern. An den offenen Enden der Befestigungsnut ist einerseits der Rahmenprofilschenkel und andererseits der untere Eckverbinder angeordnet, wodurch ein Aufspreizen der Befestigungsnut vermieden wird.
- Der untere Eckverbinder im Bereich der Befestigungsnut verschließt sicher den Gehrungsbereich.
- Der untere Basisschenkel schafft eine ebene und große Auflagefläche.
- Das Rahmenprofil ist aufgrund seines übersichtlichen und einfachen Aufbaus besonders für eine automatische, d. h. rationellere Fertigung, geeignet.

Als weiterer Vorteile der Erfindung ist noch die äußerst kostengünstige und automatisierbare Fertigung des Sonnenkollektors mit Hilfe der Rahmenprofile der Erfindung hervorzuheben.

Weitere vorteilhafte Ausführungsformen der Erfindung sind den übrigen Unteransprüchen zu entnehmen.

Nachfolgend wird die Erfindung unter Bezug auf die Zeichnung anhand von Ausführungsbeispielen näher beschrieben. Es zeigt:
Fig. 1 ein erfindungsgemäßes Rahmenprofil;
Fig. 2 die Anordnung eines Fräswerkzeugs bei der Herstellung des Rahmenprofils aus Fig. 1;
Fig. 3 die Anordnung eines Stanzwerkzeugs bei der Herstellung des Rahmenprofils aus Fig. 1;
Fig. 4 eine schematische Darstellung der Entwässerungsfunktion des erfindungsgemäßen Rahmenprofils nach Fig. 1;
Fig. 5 die Anordnung eines Kantbleches am Rahmenprofil der Fig. 1;
Fig. 6 die Anordnung einer Kopplungsdichtung an zwei benachbarten Rahmenprofilen nach Art der Fig. 1;
Fig. 7 die Anordnung eines Transporthalters am Rahmenprofil der Fig. 1;
Fig. 8 die Anordnung einer Verschlußdichtung am Rahmenprofil der Fig. 1.

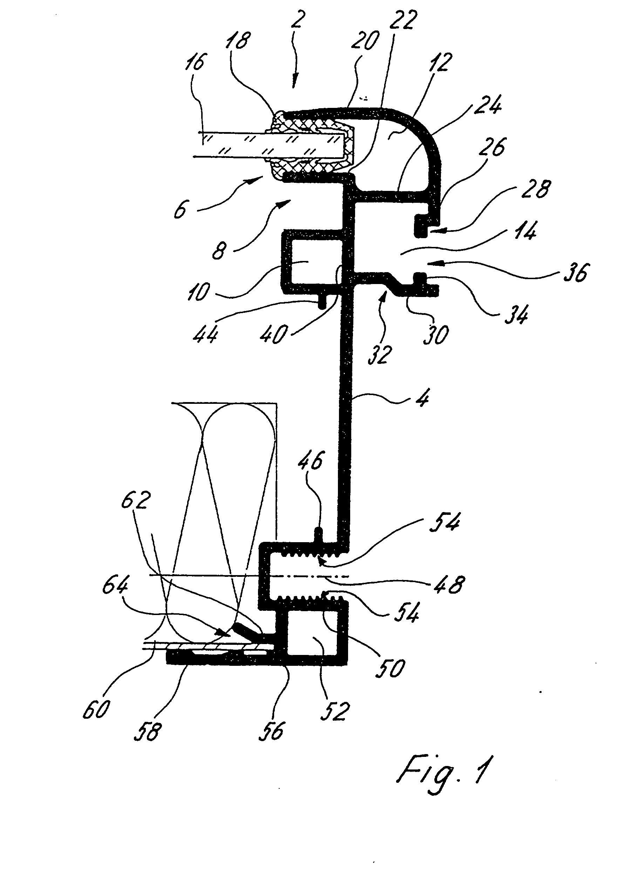

Fig. 1 zeigt ein Rahmenprofil 2 aus Aluminium mit einem den Sonnenkollektor seitlich einfassenden Grundschenkel 4, an welchen nach innen, d.h. zum eigentlichen Kollektor hin, sowie nach außen hin verschiedene Funktionselemente und -bereiche angeformt sind.

So sind an der zum Kollektor gewandte Seite des Grundschenkels eine (relativ zur Richtung des Strahlungseinfalles) obere Aufnahmenut 6, eine sich direkt an die obere Aufnahmenut anschließende Entwässerungsnut 8 und eine Eckverbinderkammer 10 ausgebildet. An der gegenüberliegenden Außenseite des Grundschenkels 4 sind dagegen in diesem oberen Bereich eine Entwässerungskammer 12 und eine sich direkt an die Entwässerungskammer anschließende Mehrfach-Funktionsnut 14 - kurz Mehrfunktionsnut - ausgebildet.

Die am vom Baukörper abgewandt liegenden Ende des Grundschenkels 4 ausgebildete Aufnahmenut 6 dient zur Aufnahme einer transparenten Abdeckscheibe 16, die in einer den Endbereich der Abdeckplatte umfassenden Dichtung 18 gehalten wird.

Die Aufnahmenut 6 weist eine obere Wandung 20 und eine untere Wandung 22 auf. Die untere Wandung 22 ist vom oberen Ende des Grundschenkels 4 aus senkrecht nach innen an den Grundschenkel 4 angeformt. Etwas unterhalb der unteren Wandung 22 ist an die gegenüberliegende Außenseite des Grundschenkels 4 eine ebenfalls senkrecht zur Grundwandung 4 ausgerichtete Basiswandung 24 angeformt. Vom äußeren Ende der Basiswandung 24 aus erstreckt sich die obere Wandung 20 zunächst parallel zum Grundschenkel 4 nach oben, durchläuft dann einen Bogen von ca. 90° und endet in einem Endabschnitt, welcher parallel zur Ebene der Abdeckscheibe 16 ausgebildet ist. Auf diese Weise bildet sich im wesentlichen zwischen der Basiswandung 24, dem gebogenen Bereich der oberen Wandung 20 und der Seite der Abdeckscheibe 16 bzw. deren Dichtung 18 die Entwässerungskammer 12 aus. Diese dient sowohl der Ableitung von in die obere Ausnahmenut 6 eindringender Feuchtigkeit als auch einem zusätzlichen Toleranz- und Dilatationsausgleich für die Abdeckscheibe 16. Die Wandung 20 setzt sich parallel zum Grundschenkel in einem Steg 26 mit einer nach innen gerichteten Stufung 28 fort. Die Entwässerungskammer 12 liegt somit außerhalb des eigentlichen Kollektorgehäuses.

Im Bereich der Eckverbinderkammer 10 ist an den Grundschenkel 4 ein weiterer senkrecht nach außen vorstehender Schenkel 30 angeformt, der seinerseits eine angeschrägte Abstufung 32 nach unten hin aufweist. Im Endbereich des Schenkels 30 steht ein senkrecht zum Schenkel 30 ausgerichteter Steg 34 nach oben hin vor, der ungefähr in einer Ebene mit dem Endbereich der Stufung 28 liegt, wobei zwischen der Stufung 28 und dem Steg 34 eine Öffnung 36 verbleibt. Damit wird zwischen dem Grundschenkel 4, der Basiswandung 24, dem Steg 26, dem Schenkel 30 und dem Steg 34 die Mehrfunktionsnut 14 ausgebildet, deren verschiedene Funktionen nachstehend noch näher erläutert werden.

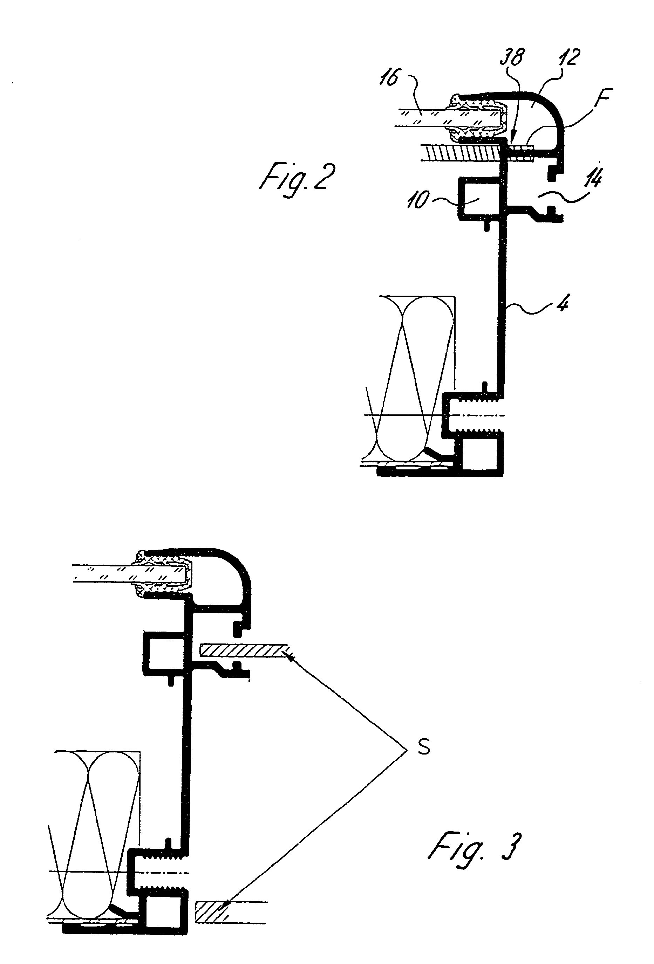

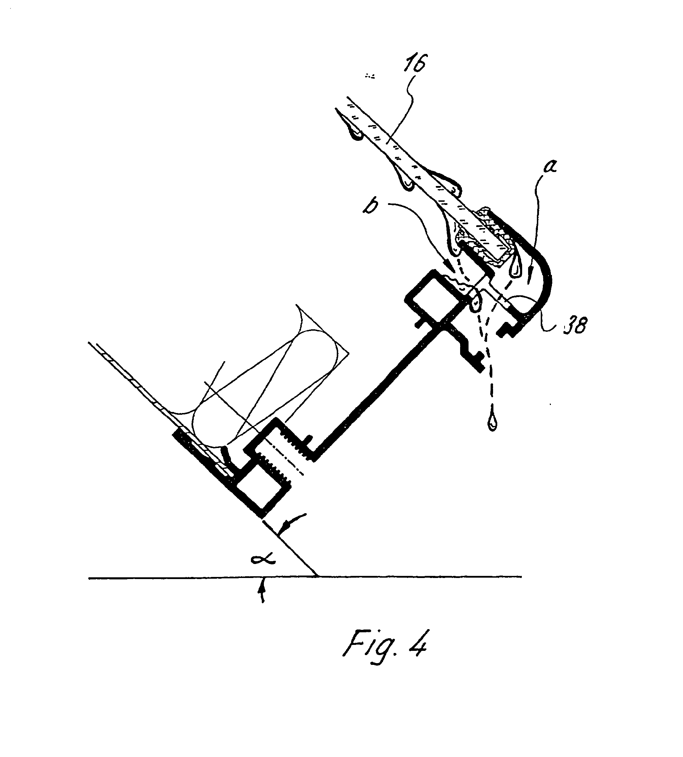

Dadurch, daß der untere Basisschenkel 24 der Entwässerungskammer 12 unterhalb der Ebene des unteren Aufnahmeschenkels 22 der Öffnung der Aufnahmenut 6 ausgebildet ist, wird erreicht, daß ein Ausklinken des Basisschenkels 24 von der Innenseite her, das heißt, nicht sichtbar von außen, für die Entwässerung und Belüftung durchführbar ist. Ferner bildet sich eine umlaufende Ablaufrinne zur Abführung von eingetretenem Sickerwasser. Dabei ist eine Entwässerungsausnehmung 38 (siehe Fig. 4) vorzusehen, die nach Art der Fig. 2 auf einfache Weise mit einem Fräswerkzeug F im Bereich der Wandungen 22 und 24 ausgebildet werden kann. In Figur 2 ist die Stellung des Fräsers F schraffiert dargestellt, wodurch auch der Bereich für die Entwässerungsausnehmung deutlich wird.

Dadurch, daß die obere Aufnahmenut 6 an ihrer Außenseite durch den relativ langen, frei verlaufenden Schenkel 20 begrenzt wird, ergibt sich eine vorteilhafte elastische Beweglichkeit, was das Einbringen der Abdeckung 16 erleichtert und dem Abfangen von nach der Montage auftretenden Bewegungen dient.

Wie in Fig. 1 dargestellt, bildet die Basiswandung 24 der Entwässerungskammer 12 gleichzeitig auch eine der Wandungen der Mehrfunktionsnut 14 aus.

Dadurch, daß sich die Eckverbinderkammer 10 direkt innen an den Grundschenkelabschnitt 40 der Mehrfunktionsnut 14 anschließt, sorgen die Haltekräfte der Ekke auf die auf Gehrung geschnittenen Profile in diesem Bereich für eine sichere Abdichtung des Gehrungsstoßes der Profile. In Hinsicht auf die Herstellung des Profils 2 ist noch als Vorteil festzuhalten, daß die Eckverbindung 10 in einfacher Weise durch die Mehrfunktionsnut 9 hindurch gestanzt werden kann (Fig. 3).

Wie ferner aus Fig. 1 ersichtlich, ist an die untere Wandung der Eckverbinderkammer 10 ein oberer Schenkel 44 angeformt, der im Zusammenspiel mit einem unteren Schenkel 46 an einer Befestigungsnut 48 im unteren Bereich des Grundschenkels 4 die Aufnahme von Blechhaltern ermöglicht, welche z.B. sogenannte Mäander, Entwässerungsrohre halten oder auch andere Winkelbleche aufnehmen können, um die Eckbereiche zusätzlich abzudichten.

Der Grundschenkel 4 endet im unteren Bereich des Sonnenkollektors in der bereits erwähnten Befestigungsnut 48. Der Grundschenkel 4 ermöglicht das Einbringen von Ein- und Auslassen für Rohre in den Sonnenkollektor. Diese Ein- und Auslasse werden - wie bereits ausgeführt - von den durch die Schenkel 44 und 46 auf einfache Weise gehalten.

Der lange Grundschenkel 4 des Rahmenprofils stützt sich am äußeren Ende der Befestigungsnut 48 ab. Die gegenüberliegende untere Seite der Befestigungsnut 48 wird durch eine obere Wandung 50 einer zweiten Eckverbinderkammer 52 ausgebildet. Hierdurch ist die Befestigungsnut 48 äußerst stabil ausgebildet, so daß ein Aufbiegen, z. B. beim Einschrauben oder beim Belasten einer Befestigungsschraube in der Befestigungsnut 48 vermieden wird.

Die Befestigungsnut 48 ist vorteilhaft mit einer Gewinderiffelung 54 versehen, die einem metrischen Gewinde entspricht und z.B. passend für eine metrische Befestigungsschraube auslegbar ist. An die untere Wandung 56 der Eckverbinderkammer 52 schließt sich ein ebener, senkrecht zur Ebene des Grundschenkels 4 ausgerichteter, unterer Befestigungs-Basisschenkel 58 an, auf welchem ein unteres Abdeckblech 60 auflegbar ist, dessen Ende zwischen dem unteren Befestigungs-Basisschenkel 58 und einer oberen ausgebildeten Klemmschenkel 62 ausgebildeten unteren Aufnahmenut 64 gehalten wird. Der Schenkel 58 ermöglicht eine sichere Auflage des Kollektors am Einbauort. Auch der Klemmschenkel 62 ist an die Eckverbinderkammer 52 angeformt, der sich vorteilhaft mit seinem freien Ende von dem Basisschenkel 58 entfernt, um das untere Abdeckblech 60 aufnehmen zu können (Einführschräge). Hierdurch wird eine leichte Montage gewährleistet.

Auch in diesem Endbereich des Profils 2 wird die Eckverbinderkammer 52 wieder am kritischen Bereich einer Nut 48 angeordnet, was wiederum im Eckbereich eine hervorragende Dichtigkeit gewährleistet.

In Figur 3 ist dargestellt, wie ein oberes und ein unteres Stanzmesser die beiden Eckverbinder festlegen. Vorteilhaft ist hierbei, daß beide Eckverbinderkammern 10, 52 gleichzeitig gestanzt werden können. Die Anordnung der Eckverbinderkammern 10, 52 trägt damit zu einem sicheren und schnellen Verbinden der Rahmenprofile bei. Figur 3 zeigt ferner, wie die Mehrfunktionsnut als Durchgang für das Stanzmesser S verwendet wird. Diese vorteilhafte Funktion wird erreicht, indem die Eckverbinderkammer 10 direkt mit der Mehrfunktionsnut verbunden ist. Ebenso wird hierdurch erreicht, daß die Gehrungsflächen der Mehrfunktionsnut sicher durch die Eckverbinder verschlossen werden.

Die zahlreichen Vorteile der Mehrfunktionsnut 14 werden insbesondere durch die Figuren 4 bis 8 deutlich.

Wie Figur 4 zeigt, ermöglicht die Mehrfunktionsnut 14 eine Entwässerung. So ermöglicht diese Nut in Verbindung mit der Entwässerungskammer 12 die Ableitung von Oberflächenwasser a. Darüber hinaus kann sich in der Entwässerungsnut 8 das an der Scheibeninnenseite, d.h. im Sonnenkollektor, gebildete Kondenswasser b sammeln und über die Entwässerungsöffnung in die Mehrfunktionsnut und somit in den Außenbereich abfließen. In Figur 4 ist das Rahmenprofil 2 des Kollektors in einer geneigten Darstellung entsprechend dem Winkel α dargestellt, welcher die Dachneigung und somit die Einbausituation des Sonnenkollektors wiedergibt.

Diese vorteilhafte Funktion der Doppelentwässerung wird auch dadurch erreicht, daß die Profilwand, welche die Entwässerungskammer mit der Multifuktionsnut 14 trennt, auf einer Ebene so positioniert ist, daß sie von einem Bearbeitungswerkzeug gut erreicht werden kann. Diese Bearbeitung ist von außen nicht sichtbar.

Die Montage von kompletten Sonnenkollektoren auf Dächern wird in zwei Methoden unterteilt. Zum einen ist die sogenannte Aufdachbefestigung bekannt, bei der die Außenhaut des Gebäudes nicht geöffnet wird. Bei der sogenannten In-Dach-Konstruktionsbauweise wird dagegen die Außenhaut des Gebäudes geöffnet und der Kollektor in die Außenhaut des Gebäudes eingelassen.

Bei der In-Dachbauweise ist ein abgedichteter Übergang zwischen dem Kollektor und der Außenhaut des Gebäudes erforderlich.

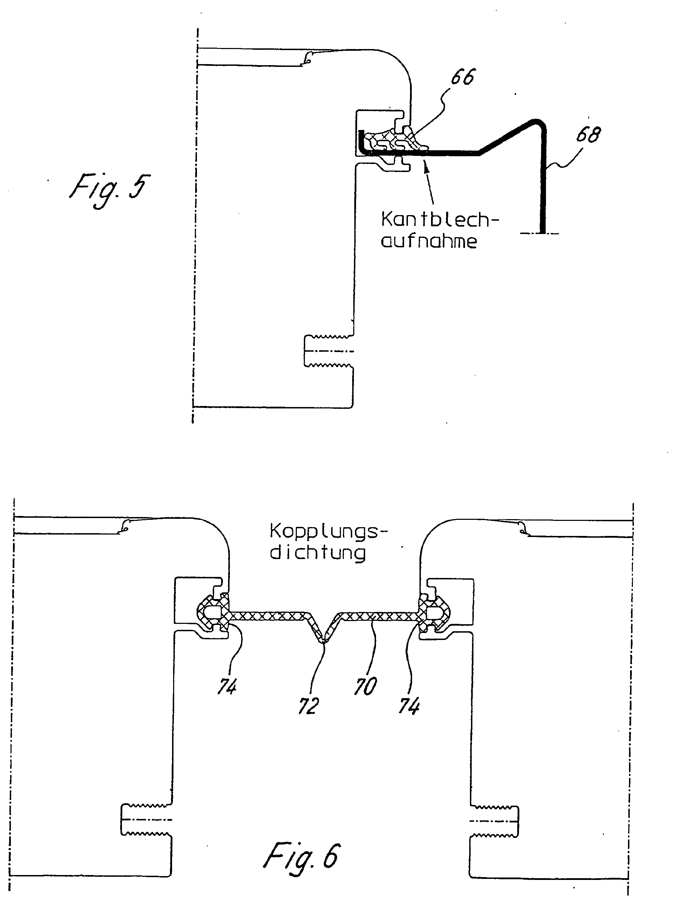

Diese Abdichtung kann dadurch erfolgen, daß in die Multi-Funktionsnut 14 nach Art der Fig. 5 Dichtungen 66 und Kantbleche 68 eingesetzt werden. Die Kantbleche 68 schaffen einen dichten direkten Übergang von dem Sonnenkollektorgehäuse zu der Außenhaut des Gebäudes. Diese Möglichkeit der Befestigung von Dichtübergängen war nach dem Stand der Technik bisher nicht möglich.

Figur 6 veranschaulicht die Möglichkeit der Aneinanderkopplung von Sonnenkollektoren, die üblicherweise mehrfach dicht nebeneinander gesetzt werden. Die Mehrfunktionsnut 14 bietet die Möglichkeit, eine speziell konzipierte Kopplungsdichtung 70 einzusetzen, so daß ein Abdichten der Zwischenräume von Sonnenkollektoren auf einfachste Weise und optisch ansprechend durchgeführt werden kann.

Die Kupplungsdichtung 70 weist einen mittleren Dichtungsabschnitt mit einer Dehnkerbe 72 auf, an dessen beide seitliche Enden Dichtungswülste 74 zum Einrasten in die Öffnung 36 der Mehrfunktionsnut 14 ausgebildet sind. Die Kupplungsdichtung 70 ist dabei so ausgebildet, daß sie rastend in die Mehrfunktionsnut 14 eingesetzt werden und dabei auch eine größere Abstandstoleranz durch die vorhandene Dehnkerbe 72 ausgleichen kann. Sie bildet darüber hinaus eine Rinne zum Abführen von Oberflächenwasser.

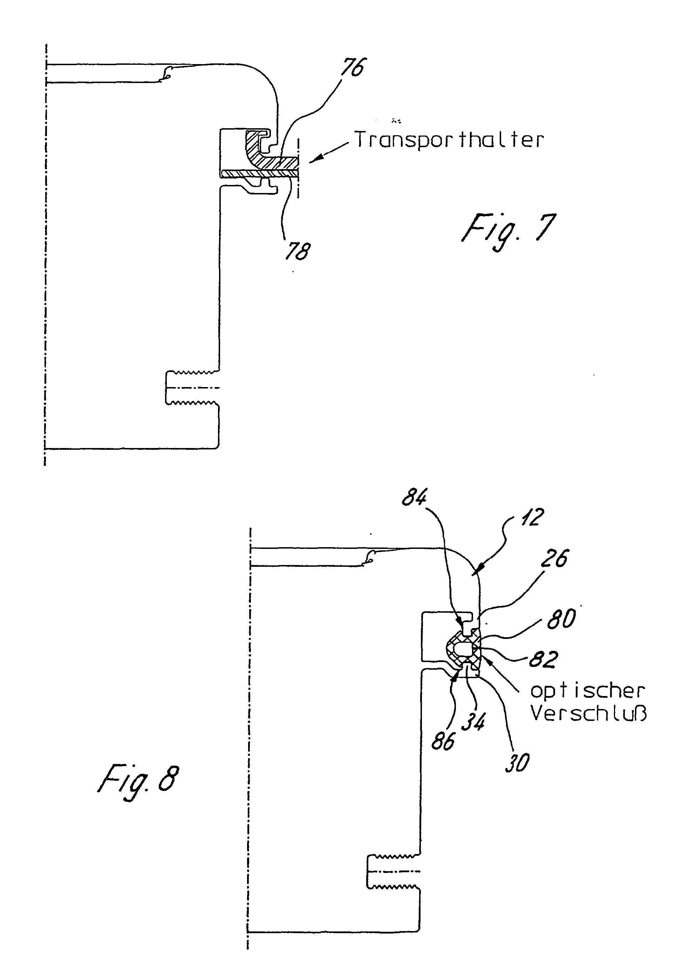

Nach Fig. 7 ist in die Mehrfunktionsnut 14 ein spezieller Transporthalter 76 eingesetzt. Der Transporthalter 76 wird durch ein zusätzliches Klemmstück 78 so in der Nut 14 positioniert und gehalten, daß der Transporthalter 76 unverlierbar ist. Hierdurch ist ein leichtes und sicheres Handling des Sonnenkollektors auch bei schwierigen Dachmontagen möglich.

Figur 8 zeigt eine weitere Möglichkeit, die durch die Mehrfunktionsnut 14 gegeben ist, in die eine rastende Dichtung 80 am Ende dergestalt eingesetzt wird, daß die Nut optisch verschlossen ist und somit vorteilhaft aussieht. Die rastende Dichtung 80 weist einen balligen, im eingesetzten Zustand nahezu ebenen Zentralabschnitt 82 auf, der mit zwei seitlichen Einschnitten 84, 86 versehen ist, welche zur Aufnahme der Stege 28 und 34 ausgebildet sind. Durch die Stufung des Steges 26 und einen leichten Versatz des Steges 34 nach innen zum Kollektor hin fluchtet die Außenseite der Dichtung 14 in optisch vorteilhafter Weise mit dem Schenkel 26 und dem Ende des Schenkels 30.

### Bezugszeichen

- Rahmenprofil: 2
- Grundschenkel: 4
- Aufnahmenut: 6
- Entwässerungsnut: 8
- Eckverbinderkammer: 10
- Entwässerungskammer: 12
- Mehrfunktionsnut: 14
- Abdeckscheibe: 16
- Dichtung: 18
- obere Wandung: 20
- untere Wandung: 22
- Basiswandung: 24
- Steg: 26
- Stufung: 28
- Schenkel: 30
- Abstufung: 32
- Steg: 34
- Öffnung: 36
- Entwässerungsausnehmung: 38
- Grundschenkelabschnitt: 40
- Wandung: 42
- oberer Schenkel: 44
- unteren Schenkel: 46
- Befestigungsnut: 48
- obere Wandung: 50
- Eckverbinderkammer: 52
- Gewinderiffelung: 54
- Wandung: 56
- Befestigungs-Basisschenkel: 58
- Abdeckblech: 60
- Klemmschenkel: 62
- untere Aufnahmenut: 64
- Dichtungen: 66
- Kantbleche: 68
- Kopplungsdichtung: 70
- Dehnkerbe: 72
- Dichtungswülste: 74
- Transporthalter: 76
- Klemmstück: 78
- Dichtung: 80
- Zentralabschnitt: 82
- Einschnitte: 84, 86
- Winkel: α
- Fräser: F
- Stanzmesser: S

## Patentansprüche

1. Sonnenkollektor mit einem Rahmenprofil (2) wobei das Rahmenprofil folgendes aufweist:
a) einen den Sonnenkollektor seitlich einfassenden Grundschenkel (4),
b) eine an den Grundschenkel (4) angeformte, zum Kollektorinneren hin offene erste Aufnahmenut (6) in der eine dem Strahlungseinfall zugewandte obere Abdeckung (16) aufgenommen ist,
c) sowie eine an den Grundschenkel (4) angeformte, zum Kollektorinneren hin offene zweite Aufnahmenut (64), in die wenigstens eine dem Strahlungseinfall abgewandte untere Abdeckung (60) eingreift,
d) wobei unter der oberen Abdeckung (16) eine Absorbereinrichtung, insbesondere eine oder mehrere Absorberplatten, sowie Hin- und Rücklaufleitungen für ein Wärmeträgermedium und/oder Wärmeisoliermittel untergebracht sind,
e) **dadurch gekennzeichnet, daß** an der vom Kollektorinneren abgewandt liegenden Außenseite des Grundschenkels (4) eine mit einer Öffnung (36) versehene Mehrfunk tionsnut (14) vorgesehen ist, welche zur Ableitung von Feuchtigkeit am Sonnenkollektor und zur Aufnahme von Dichtungen und/oder zur Auf nahme anderer Elemente ausgelegt ist, und
f) an die erste Aufnahmenut (6) für die obere Abdeckung (16) eine nach außen über die Ebene des Grundschenkels (4) vorstehende Entwässerungskammer (12) angeformt ist,
g) eine untere Basiswandung (24) der Entwässemngskammer (12) unterhalb der Ebene des unteren Aufnahmeschenkels (22) der Öffnung der ersten Aufnahmenut (6) ausgebildet ist.

2. Rahmenprofil nach Anspruch 1, **dadurch gekennzeichnet, daß** sich an die erste Aufnahmenut (6) für die obere Abdeckung (16) des Sonnenkollektors eine Entwässerungsnut (8) für an der Innenseite der Abdeckung (16) auftretende Feuchtigkeit anschließt.

3. Rahmenprofil nach Anspruch 2, **dadurch gekennzeichnet, daß** die Entwässerungsnut (8) zwischen der ersten Aufnahmenut (6) und einer zum Kollektorinneren hin an den Grundschenkel (4) angeformten Eckverbinderkammer (10) ausgebildet ist.

4. Rahmenprofil nach einem der vorstehenden Ansprüche2 oder 3, **dadurch gekennzeichnet, daß** die Entwässerungsnut (8) und die Mehrfunktionsnut (14) über wenigstens eine Entwässerungsausnehmung (38) im Grundschenkel (4) miteinander verbunden sind.

5. Rahmenprofil nach einem der vorstehenden Ansprüche, **dadurch gekennzeichnet, daß** die Öffnung (36) an der vom Grundschenkel (4) abgewandten Außenseite der Mehrfunktionsnut (14) ausgebildet ist.

6. Rahmenprofil nach einem der vorstehenden Ansprüche, **dadurch gekennzeichnet, daß** die Basiswandung (24) zwischen der Mehrfunktionsnut (14) und der an die erste Aufnahmenut (6) angeformten Entwässerongskammer (12) elastisch ausgebildet ist.

7. Rahmenprofil nach einem der vorstehenden Ansprüche, **dadurch gekennzeichnet, daß** die Mehrfunktionsnut (14) von dem Grundschenkel (4), der Basiswandung (24) zur Entwässerungskammer (12), einem senkrecht zur Basiswandung ausgerichteten Steg (26), einem senkrecht zum Grundschenkel (4) ausgebildeten Schenkel (30) und einem senkrecht zum Schenkel (30) ausgerichteten Steg (34) begrenzt wird.

8. Rahmenprofil nach einem der vorstehenden Ansprüche 3 bzw 4-7 in Verbindung mit Anspruch 3, **dadurch gekennzeichnet, daß** die Eckverbinderkammer (10) direkt innen an einen Grundschenkelabschnitt (40) der Mehrfunktionsnut (14) angeformt ist

9. Rahmenprofil nach einem der vorstehenden Ansprüche 3 bzw. 4-8 in Verbindung mit Anspruch 3, **dadurch gekennzeichnet, daß** an die Eckverbinderkammer (10) ein nach unten weisender erster Schenkel (44) angeformt ist, der im Zusammenspiel mit einem nach oben weisenden zweiten Schenkel (46) an einer Befestigungsnut (48) im unteren Bereich des Grundschenkels (4) die Aufnahme von Halteelementen ermöglicht.

10. Rahmenprofil nach Anspruch 10, **dadurch gekennzeichnet, daß** der Grundschenkel (4) nach unten hin an der Befestigungsnut (48) endet.

11. Rahmenprofil nach einem der vorstehenden Ansprüche 9 oder 10, **dadurch gekennzeichnet, daß** die Befestigungsnut (48) an eine untere Eckverbinder kammer (52) angrenzt.

12. Rahmenprofil nach einem der vorstehenden Ansprüche 9 bis 11, **dadurch gekennzeichnet, daß** die Befestigungsnut (48) mit einer Gewinderiffelung (54) versehen ist.

13. Rahmenprofil nach einem der vorstehenden Ansprüche 11 oder 12, **dadurch gekennzeichnet, daß** sich an eine untere Wandung (56) der Eckverbinderkammer (52) ein ebener, senkrecht zur Ebene des Grundschenkels (4) ausgerichteter, unterer Befestigungsschenkel (58) zur Auflage der unteren Abdeckung (60) anschließt.

14. Rahmenprofil nach Anspruch 13, **dadurch gekennzeichnet, daß** die untere zweite Aufnahmenut (64) zwischen dem unteren Befestigungs-Basisschenkel (58) und einem oberhalb des unteren Bestigungs-Basisschenkels (58) ausgebildeten Klemmschenkel (62) ausgebildet ist

15. Rahmenprofil nach Anspruch 14, **dadurch gekennzeichnet, daß** der Klemmschenkel (62) direkt an die Eckverbinderkammer (52) angeformt ist

16. Rahmenprofil nach einem der vorstehenden Ansprüche, **dadurch gekennzeichnet, daß** die Mehrfunktionsnut (14) ein Kantblech (68) aufnimmt.

17. Rahmenprofil nach einem der vorstehenden Ansprüche, **gekennzeichnet durch** einen mit einem Klemmstück(78) in der Mehrfunktionsnut positionierten Transporthalter (76).

18. Rahmenprofil nach Anspruch 7, **dadurch gekenn zeichnet, daß** eine die Mehrfunktionsnut (14) eingesetzte Dichtung (80) einen balligen, im eingesetzten Zustand nahezu ebenen Zentralabschnitt (82) aufweist, der mit zwei seitlichen Einschnitten (84, 86) versehen ist, welche zur Aufnahme der Stege (28,34) ausgelegt sind.

19. Rahmenprofil nach einem der vorstehenden Ansprüche, **gekennzeichnet durch** wenigstens eine in die Mehrfunktionsnut eingesetzte Kopplungsdich tung (70) zur Verbindung des Rahmenprofils (4) mit weiteren Rahmenprofilen benachbarter Sonnenkollektoren.

20. Rahmenprofil nach Anspruch 19, **dadurch gekennzeichnet, daß** die Kupplungsdichtung (70) einen mittleren Dichtungsabschnitt mit einer Dehnkerbe (72) aufweist, an dessen beide seitliche Enden Dichtungswülste (74) zum Einrasten in die Öffnung (36) der Mehrfunktionsnut (14) ausgebildet sind.

## Claims

1. Solar collector with a frame profile (2), the frame profile having the following:
a) a basic leg (4) which encases the solar collector laterally,
b) a first accommodating groove (6), which is integrally formed on the basic leg (4), is open in the direction of the interior of the collector and in which is accommodated a top covering (16), which is directed towards the incidence of radiation,
c) and a second accommodating groove (64), which is integrally formed on the basic leg (4), is open in the direction of the interior of the collector and in which engages at least one bottom covering (70), which is directed away from the incidence of radiation,
d) there being accommodated, beneath the top covering (16), an absorber device, in particular one or more absorber panels, and feed and return lines for a heat-transfer medium and/or heat-insulating means,
**characterized in that**
e) provided on the outside of the basic leg (4), the outside being directed away from the interior of the collector, is a multifunctional groove (14) which is provided with an opening (36) and is designed for channelling away moisture on the solar collector and for accommodating seals and/or for accommodating other elements, and
f) a drainage chamber (12) which projects outwards beyond the plane of the basic leg (4) is integrally formed on the first accommodating groove (6) for the top covering (16),
g) a bottom, base wall (24) of the drainage chamber (12) is formed, beneath the plane of the bottom accommodating leg (22) of the opening of the first accommodating groove (6).

2. Frame profile according to Claim 1, **characterized in that** the first accommodating groove (6) for the top covering (16) of the solar collector is adjoined by a drainage groove (8) for moisture accumulating on the inside of the covering (16).

3. Frame profile according to Claim 2, **characterized in that** the drainage groove (8) is formed between the first accommodating groove (6) and a corner-connector chamber (10) which is integrally formed on the basic leg (4) in the direction of the interior of the collector.

4. Frame profile according to either of Claims 2 and 3, **characterized in that** the drainage groove (8) and the multifunctional groove (14) are connected to one another via at least one drainage aperture (38) in the basic leg (4).

5. Frame profile according to one of the preceding claims, **characterized in that** the opening (36) is formed on the outside of the multifunctional groove (14), the outside being directed away from the basic leg (4).

6. Frame profile according to one of the preceding claims, **characterized in that** the base wall (24) is formed elastically between the multifunctional groove (14) and the drainage chamber (12), which is integrally formed on the first accommodating groove (6).

7. Frame profile according to one of the preceding claims, **characterized in that** the multifunctional groove (14) is bounded by the basic leg (4), the base wall (24) of the drainage chamber (12), a crosspiece (26) oriented perpendicularly to the base wall, a leg (30) formed perpendicularly to the basic leg (4), and a crosspiece (34) oriented perpendicularly to the leg (30).

8. Frame profile according to one of the preceding Claims 3 and 4-7 in conjunction with Claim 1, **characterized in that** the corner-connector chamber (10) is integrally formed directly on the inside of a basic-leg section (40) of the multifunctional groove (14).

9. Frame profile according to one of the preceding Claims 3 and 4-8 in conjunction with Claim 1, **characterized in that** a downwardly oriented first leg (44) is integrally formed on the corner-connector chamber (10) and, in conjunction with an upwardly oriented second leg (46) on a fastening groove (48) in the bottom region of the basic leg (4), makes it possible to accommodate retaining elements.

10. Frame profile according to Claim 10, **characterized in that** the basic leg (4) terminates in the downward direction at the fastening groove (48).

11. Frame profile according to either of preceding Claims 9 and 10, **characterized in that** the fastening groove (48) is adjacent to a bottom corner-connector chamber (52).

12. Frame profile according to one of preceding Claims 9 to 11, **characterized in that** the fastening groove (48) is provided with a thread corrugation (54).

13. Frame profile according to either of preceding Claims 11 and 12, **characterized in that** a bottom wall (56) of the corner-connector chamber (52) is adjoined by a planar bottom fastening leg (58) which is oriented perpendicularly to the plane of the basic leg (4) and is intended for bearing the bottom covering (60).

14. Frame profile according to Claim 13, **characterized in that** the bottom, second accommodating groove (64) is formed between the bottom fastening basic leg (58) and a clamping leg (62), which is formed above the bottom fastening basic leg (58).

15. Frame profile according to Claim 14, **characterized in that** the clamping leg (62) is integrally formed directly on the corner-connector chamber (52).

16. Frame profile according to one of the preceding claims, **characterized in that** the multifunctional groove (14) accommodates an angled sheet (68).

17. Frame profile according to one of the preceding claims, **characterized by** a transporting holder (76), which is positioned in the multifunctional groove by way of a clamping component (78).

18. Frame profile according to Claim 7, **characterized in that** a seal (80) inserted into the multifunctional groove (14) has a convex central section (82) which is more or less planar in the inserted state and is provided with two lateral recesses (84, 86) which are designed for accommodating the crosspieces (28, 34).

19. Frame profile according to one of the preceding claims, **characterized by** at least one coupling seal (70) which is inserted into the multifunctional groove and is intended for connecting the frame profile (4) to further frame profiles of adjacent solar collectors.

20. Frame profile according to Claim 19, **characterized**
**in that** the coupling seal (70) has a central sealing section with an expansion notch (72), sealing beads (74) for latching into the opening (36) of the multifunctional groove (14) being formed at the two lateral ends of this central sealing section.

## Revendications

1. Collecteur solaire avec un profilé de cadre (2), le profilé de cadre présentant les éléments suivants :
a) un montant principal (4) encadrant latéralement le collecteur solaire;
b) une première rainure de réception (6) formée sur le montant principal (4), ouverte vers l'intérieur du collecteur, où est inséré un panneau de couverture supérieur (16) orienté vers l'incidence du rayonnement,
c) ainsi qu'une deuxième rainure de réception (64) formée sur le montant principal (4), ouverte vers l'intérieur du collecteur, où s'engage au moins un panneau de couverture inférieur (60), opposé à l'incidence du rayonnement,
d) un dispositif absorbeur, en particulier un ou plusieurs panneaux absorbeurs, ainsi que des conduites d'amenée et de retour pour un milieu caloporteur et/ou des éléments isolants thermiques étant disposés sous le panneau de couverture supérieur (16),
**caractérisé en ce que**
e) sur la face extérieure du montant principal (4) opposée à l'intérieur du collecteur est prévue une rainure polyvalente (14) munie d'une ouverture (36), conçue pour l'évacuation de l'humidité du collecteur solaire et pour le logement de joints et/ou pour la réception d'autres éléments, et **en ce que**
f) sur la première rainure de réception (6) pour le panneau de couverture supérieur (16) est formé un compartiment de drainage (12) saillant vers l'extérieur au-delà du plan du montant principal (4),
g) et **en ce qu'**une paroi de base (24) inférieure du compartiment de drainage (12) est formée en-dessous du plan du côté de réception inférieur (22) de l'ouverture de la première rainure de réception (6).

2. Profilé de cadre selon la revendication 1, **caractérisé en ce qu'**une rainure de drainage (8) pour l'humidité apparaissant sur la face intérieure du panneau de couverture (16) est adjacente à la première rainure de réception (6) pour le panneau de couverture supérieur (16) du collecteur solaire.

3. Profilé de cadre selon la revendication 2, **caractérisé en ce que** la rainure de drainage (8) est formée entre la première rainure de réception (6) et un compartiment de raccord d'angle (10) formé vers le collecteur sur le montant principal (4).

4. Profilé de cadre selon l'une des revendications 2 ou 3 précédentes, **caractérisé en ce que** la rainure de drainage (8) et la rainure polyvalente (14) sont reliées entre elles par au moins un évidement de drainage (38) dans le montant principal (4).

5. Profilé de cadre selon l'une des revendications précédentes, **caractérisé en ce que** l'ouverture (36) est formée sur la face extérieure de la rainure polyvalente (14) opposée au montant principal (4).

6. Profilé de cadre selon l'une des revendications précédentes, **caractérisé en ce que** la paroi de base (24) est élastiquement formée entre la rainure polyvalente (14) et le compartiment de drainage (12) formé sur la première rainure de réception (6).

7. Profilé de cadre selon l'une des revendications précédentes, **caractérisé en ce que** la rainure polyvalente (14) est limitée par montant principal (4), la paroi de base (24) pour le compartiment de drainage (12), une traverse (26) orientée perpendiculairement à la paroi de base, un côté (30) orienté perpendiculairement au montant principal (4) et une traverse (34) orientée perpendiculairement au côté (30).

8. Profilé de cadre selon l'une des revendications 3 ou 4 à 7 en relation avec la revendication 3 précédentes, **caractérisé en ce que** le compartiment de raccord d'angle (10) est formé à l'intérieur directement sur un segment de montant principal (40) de la rainure polyvalente (14).

9. Profilé de cadre selon l'une des revendications 3 ou 4 à 8 en relation avec la revendication 3 précédentes, **caractérisé en ce qu'**un premier côté (44) dirigé vers le bas est formé sur le compartiment de raccord d'angle (10), lequel permet le logement d'éléments de maintien en coopération avec un deuxième côté (46) dirigé vers le haut, formé sur une rainure de fixation (48) dans la zone inférieure du montant principal (4).

10. Profilé de cadre selon la revendication 9, **caractérisé en ce que** le montant principal (4) aboutit sur le bas à la rainure de fixation (48).

11. Profilé de cadre selon l'une des revendications 9 ou 10 précédentes, **caractérisé en ce que** la rainure de fixation (48) est adjacente à un compartiment de raccord d'angle inférieur (52).

12. Profilé de cadre selon l'une des revendications 9 à 11 précédentes, **caractérisé en ce que** la rainure de fixation (48) est pourvue d'un striage fileté (54).

13. Profilé de cadre selon l'une des revendications 11 ou 12 précédentes, **caractérisé en ce qu'**un côté de fixation inférieur (58) plan, perpendiculaire au plan du montant principal (4), pour la réception du panneau de couverture inférieur (60) est adjacent à une paroi inférieure (56) du compartiment de raccord d'angle inférieur (52).

14. Profilé de cadre selon la revendication 13, **caractérisé en ce que** la deuxième rainure inférieure de réception (64) est formée entre le côté de base de fixation inférieur (58) et un côté de serrage (62) formé au-dessus du côté de base de fixation inférieur (58).

15. Profilé de cadre selon la revendication 14, **caractérisé en ce que** le côté de serrage (62) est formé directement contre le compartiment de raccord d'angle inférieur (52).

16. Profilé de cadre selon l'une des revendications précédentes, **caractérisé en ce que** la rainure polyvalente (14) reçoit une tôle bordée (68).

17. Profilé de cadre selon l'une des revendications précédentes, **caractérisé par** un support de transport (76) positionné dans la rainure polyvalente avec une pièce de serrage (78).

18. Profilé de cadre selon la revendication 17, **caractérisé en ce qu'**un joint (80) inséré dans la rainure polyvalente (14) présente une section centrale (82) bombée, pratiquement plane à l'état d'insertion, pourvue de deux entailles latérales (84, 86) prévues pour recevoir les traverses (28, 34).

19. Profilé de cadre selon l'une des revendications précédentes, **caractérisé par** au moins un joint d'accouplement (70) inséré dans la rainure polyvalente pour le raccordement du profilé de cadre (4) à d'autres profilés de cadres de collecteurs solaires voisins.

20. Profilé de cadre selon la revendication 19, **caractérisé en ce que** le joint d'accouplement (70) présente une section de joint centrale avec une encoche extensible (72), aux deux extrémités latérales de laquelle des boudins de joint (74) sont formés pour enclenchement dans l'ouverture (36) de la rainure polyvalente (14).
